# EUROPÄISCHE PATENTSCHRIFT

(11) **EP 2 807 614 B1**
(45) Veröffentlichungstag und Bekanntmachung des Hinweises auf die Patenterteilung: **31.03.2021**
(21) Anmeldenummer: 13701904.8
(22) Anmeldetag: 16.01.2013
(51) Int. Cl.: G06K 19/077

(54) **VERFAHREN ZUM HERSTELLEN EINES DATENTRÄGERS**
METHOD FOR PRODUCING A DATA CARRIER
PROCÉDÉ DE PRODUCTION D'UN SUPPORT DE DONNÉES

(30) Priorität: 24.01.2012 DE 102012001345
(43) Veröffentlichungstag der Anmeldung: 03.12.2014
(60) Teilanmeldung: 15000755.7
(73) Patentinhaber: Giesecke+Devrient Mobile Security GmbH, 81677 München (DE)
(72) Erfinder: GRIESMEIER, Robert, 83052 Bruckmühl (DE); TARANTINO, Thomas, 83410 Laufen (DE); SALZER, Tobias, 82008 Unterhaching (DE); BRAUN, Andreas, 80798 München (DE); ADLER, Cliff, 81929 München (DE)
(86) Internationale Anmeldenummer: PCT/EP2013/000136
(87) Internationale Veröffentlichungsnummer: WO 2013/110445

(56) Entgegenhaltungen:
- WO-A1-2008/031584
- CA-A1- 2 759 688
- DE-A1-102010 020 460
- US-A1- 2011 073 661

## Beschreibung

Die Erfindung betrifft ein Verfahren zum Herstellen eines Datenträgers, eines Inlays für einen Datenträgers, sowie einen Datenträger selbst. Insbesondere betrifft die Erfindung ein Verfahren zur Herstellung eines kontaktlos auslesbaren Datenträgers mit integriertem IC, das als Chipkarte, Identifikationsdokument, Ausweis oder als Datenseite in einem Passbuch nutzbar ist.

Bei einem Datenträger handelt es sich grundsätzlich um ein in Baugröße und Ressourcenumfang reduzierten Computer, der einen Mikrocontroller und mindestens eine Schnittstelle zur Kommunikation mit einem externen Gerät aufweist. Häufig besitzt er keine oder nur eine rudimentäre eigene Nutzerdatenausgabe. Seine äußere Bauform ist so gestaltet, dass er von einem Benutzer leicht zu jeder Zeit mitgeführt werden kann. Vorzugsweise ist ein Datenträger mit entsprechenden Sicherheitsfunktionalitäten ausgestattet, beispielsweise in Form einer Smart Card, Chipkarte, Massenspeicherkarte und/oder einer Multimediakarte. Bei einem tragbaren Datenträger kann es sich auch um ein elektronisches Identitätsdokument handeln, beispielsweise ein elektronischer Personalausweis oder ein Reisepass mit, auf einem Chip gespeicherten maschinenlesbaren Identifikationsdaten einer Person.

Tragbare Datenträger weisen inzwischen vermehrt eine kontaktlose Schnittstelle auf. Das Betriebssystem der Chipkarte ist dabei so ausgelegt, dass die kontaktlose Schnittstelle beispielsweise gemäß einer der in den Standards ISO/IEC 14443,15693 oder 18092 beschriebenen Protokolle Daten austauschen kann. Dazu werden die Datenträger mit Transponderanordnungen versehen, die aus einem Chip, das einen IC enthält, und einer damit verbundenen Nahfeldkommunikationsantenne bestehen. Zur Vereinfachung wird im Folgenden der Begriff Spule anstelle Nahfeldkommunikationsantenne verwendet. Diese Chip-Spulen-Anordnungen ermöglichen es, in dem IC gespeicherte Daten kontaktlos auszulesen und/oder Daten kontaktlos einzuschreiben. Die Herstellung solcher Datenträger erfolgt typischerweise durch Laminieren von zumindest einer Kern- und zwei Deckschichten, wobei in die Kernschicht die Chip-Spulen-Anordnung integriert wird. Derartige Aufbauten werden auch als Inlay bezeichnet.

Es ist ein grundsätzliches Anliegen, derartige Datenträger gegen Nachahmung zu schützen. In diesem Zusammenhang ist es bekannt, ein oder mehrere Kartenelemente auf den Datenträger aufzubringen oder in den Datenträger einzulagern. Beispielsweise werden dazu Hologramme, Sichtfenster, Sicherheitsfäden, Spezialprägungen, Magnetstreifen oder innenliegende elektrische Komponenten etc. in den Datenträgerkörper integriert.

Die Sicherheitsfadentechnologie ist aus dem Bereich der Sicherheitspapiere, insbesondere Banknoten, bekannt. Dort sind die Sicherheitsfäden eingelassen und in Durchsicht sichtbar. Der Sicherheitsfaden kann auch wellenförmig eingelagert, sodass er zumindest auf einer oder auch auf beiden Seiten des Dokuments an die Oberfläche tritt. Ein solcher Faden wird als einseitiger oder beidseitiger Fensterfaden bezeichnet. Breite Sicherheitsfäden werden auch als Sicherheitsbänder oder Sicherheitsstreifen bezeichnet.

In der Regel sind Sicherheitsfäden, -bänder oder -streifen mehrschichtig ausgebildet und umfassen eine Trägerfolie und eine auf die Trägerfolie aufgebrachte Metallisierung, wodurch der Faden elektrisch leitfähig ist. Die elektrische Leitfähigkeit stellt dabei ein maschinell prüfbares Sicherheitsmerkmal dar. Der Faden kann mit zahlreichen weiteren Sicherheitsmerkmalen versehen sein. Beispielsweise können in der Metallisierung Zeichen und Muster ausgespart sein. In der DE 101 11 848 A1 werden verschiedene Möglichkeiten beschrieben, wie durch Kombination von metallisierten Flächen, Flächenbrillanz, elektrisch leitfähigen Flächen und Flächenwiderstandsänderungen für einen potentiellen Fälscher nicht überwindbare technologische Hürden aufgebaut werden können.

Sicherheitsfäden im Sinne der vorliegenden Erfindung sind streifenförmige Kartenelemente, die ganz und/oder teilweise in Draufsicht und/oder in Durchsicht am bzw. im Datenträger sichtbar sind, so dass sie ein visuell prüfbares Sicherheitsmerkmal darstellen. Alternativ sind Sicherheitsfäden im Sinne der vorliegenden Erfindung maschinell prüfbar, wodurch diese nicht bei Draufsicht oder Durchsicht am/im Datenträger sichtbar sein müssen, da eine maschinelle Codierung, beispielsweise eine Magnetcodierung etc. mittels entsprechenden Endgeräten ausgelesen wird.

Das Ein- und Aufbringen von Sicherheitsfäden, -bändern und -streifen erstreckt sich auch auf Datenträger aus Kunststoff, insbesondere Chipkarten.

In der DE 101 34 817 A1 wird beschrieben, wie ein Sicherheitsfaden in einen kartenförmigen Datenträger oder ein Folienhalbzeug dafür beschrieben. Das Folienhalbzeug wird mit weiteren Folien unter Druck und Temperatur laminiert bzw. verschweißt wird. Anschließend wird aus dem Halbzeug die Karte in ihren endgültigen Abmessungen herausgetrennt.

In der DE 10 2006 043 021 A1 wird ein tragbarer Datenträger beschrieben, der eine Spule aufweist und weiterhin mit einem metallischen Sicherheitsfaden ausgestattet ist. Um die Spule nicht mit dem Sicherheitsfaden elektrisch zu überbrücken, wird vorgeschlagen, die Spule in den Kreuzungsbereichen zwischen Spule und Sicherheitsfaden elektrisch zu isolieren. Alternativ wird der Sicherheitsfaden als Leiterbrücke der Spule ausgestaltet

DE 10 2010 020 460 A1 beschreibt ein Sicherheits- oder Wertdokument, das einen elektronischen Schaltkreis ohne Gehäuse aufweist, welcher sich in einem Einbettungsmaterial befindet.

Ein Problem in Bezug auf die Dauerbeständigkeit des Datenträgers bildet die Kontaktloskommunikationsfunktion. Insbesondere kommt es bei Belastung des Datenträgers zu sogenannten Spulenrissen, auch als Spulenbrüche oder Spulenunterbrechungen. Durch diese Spulenrisse wird insbesondere die elektrische Funktionalität der Datenträger beeinträchtigt. In extremen Fällen ist die elektrische Funktionalität des Datenträgers, insbesondere das kontaktlose Auslesen/Einbringen von Daten aus/in den IC des Datenträgers nicht mehr gegeben.

Problematisch ist insbesondere, dass die während des Laminierens auftretenden mechanischen Beanspruchungen der Spule und der daran angeschlossenen elektronischen Komponenten nicht ausreichend kompensiert werden. Diese Beanspruchungen führen zu mechanischen Belastungen der Spule im Datenträger, wodurch der Datenträger bereits während seiner Herstellung geschwächt wird und die Lebensdauer des Datenträgers verringert wird.

Der Erfindung liegt daher die Aufgabe zugrunde, ein Verfahren anzugeben, das es ohne wesentliche Eingriffe in den Laminierprozess erlaubt stabile Spulen im Datenträger bereitzustellen. Insbesondere sollen mechanische Spannungen vermieden werden, die während eines Laminierprozesses im Datenträgerkörper entstehen und zu Rissbildungen in der Spule führen können. Dabei soll das Verfahren massenfertigungstauglich, kostengünstig und ohne erheblichen Zeitmehraufwand bleiben.

Die Aufgabe der Erfindung wird durch die in den nebengeordneten unabhängigen Patentansprüchen 1 und 5 beschriebenen Maßnahmen gelöst. Vorteilhafte Ausgestaltungen sind in den jeweils abhängigen Ansprüchen beschrieben.

Die Spule ist entweder direkt auf die Trägerschicht aufgedruckt, geätzt oder in Form von Drahtwicklungen oberhalb der Trägerschicht angeordnet und wird beim Laminieren zwischen Trägerschicht und Deckschicht eingebettet. Die Anzahl der Windungen, die Beschaffenheit der Leiterbahnen und das Verlegen der einzelnen Leiterbahnen kann dabei sehr unterschiedlich sein und kann je nach Beschaffenheit, Material, Aufbau und elektrischen Eigenschaften des Datenträgerkörpers variieren.

Durch die Spulenstabilisierung wird der Druck, der sich während des Laminierens auf die Spule auswirkt, stark minimiert. Insbesondere wird beim klassischen Herstellen das Folienmaterial der Deckschicht oberhalb der Spule verdrängt, wodurch die Schichtdicke der Deckschicht oberhalb der Spule geringer ist als in Bereichen der Trägerschicht, in denen die Spule nicht verlegt wurde. Durch die verringerte Schichtdicke aufgrund der Materialverdrängung und des verpressten Folienmaterials wird ein stärkerer Druck auf die Spule ausgeübt, was wiederum zu Materialverdrängung des Spulenmaterials führt. Die Spule wird demnach bereits beim Laminieren geschwächt. Durch Applizieren der Spulenstabilisierung oberhalb der Spule wird diese Spulenschwächung verhindert und die Spule während des Laminierprozesses geschont.

In einer vorteilhaften Ausgestaltung wird vor dem Aufbringen der Deckschicht eine Kernschicht aufgebracht. Die Spulenstabilisierung wird dabei direkt auf die Spule und/oder oberhalb der Spule in die Kernschicht appliziert. Dies hat den Vorteil, dass eine weitere Schutzschicht in den Datenträgerkörper eingebracht wird, wodurch die Spule zusätzlich geschützt wird. Ist die Kernschicht eine Platzhalter-Folienschicht, auch als Spacerfolie bezeichnet, so wird alternativ die Spulenstabilisierung auf der oberhalb der Kernschicht liegenden Schicht oder in einer Aussparung der Kernschicht appliziert.

Gemäß der Erfindung wird oberhalb der Spulenstabilisierung ein Kartenelement in den Datenträger eingebracht. Das Kartenelement bewirkt, dass der Kreuzungsbereich zwischen Spule und Kartenelement während des Laminierens enorm belastet wird. Durch das Kartenelement wird in verstärktem Maße das Folienmaterial der Deckschicht oder der Kernschicht unterhalb des Kartenelements beim Laminieren verdrängt bzw. verpresst. Dadurch wird der Druck auf die Spule beim Laminieren weiter erhöht. Durch die erfindungsgemäß eingebrachte Spulenstabilisierung wird die Spule geschützt. Durch das eingebrachte Kartenelement wird der Datenträger gegen Fälschung abgesichert. Das Kartenelement ist bevorzugt ein Sicherheitsfaden. Da der Sicherheitsfaden häufig von einer Seitenkante zur gegenüberliegenden Seitenkante des Datenträgers eingebracht ist, kreuzt er bei Draufsicht auf den Datenträger zumindest einmal die eingebrachte Spule. Durch Verwendung der Spulenstabilisierung unterbleibt die Schwächung der Spule in dem Kreuzungsbereich.

In einer alternativen Ausgestaltung gemäß Ansprüche 1 und 5 ist das Kartenelement ein Magnetstreifen, der ähnlich zum Sicherheitsstreifen von einer Seitenkante zur gegenüberliegenden Seitenkante des Datenträgers eingebracht ist, wodurch er bei Draufsicht die Spule mindestens einmal kreuzt. Durch Verwendung der Spulenstabilisierung unterbleibt die Schwächung der Spule in dem Kreuzungsbereich.

In einer bevorzugten Ausgestaltung wird die Spulenstabilisierung in eine Aussparung der Kernschicht appliziert. Durch Einbringen in die Aussparung wird eine quasikonstante Dicke des Datenträgers oberhalb der Spule erhalten. Somit wirken beim Laminieren keine extra Kräfte aufgrund der Dicke des Spulenstabilisierung auf die Spule, was die Spule weiter schont. Zusätzlich müssen keine Parameter beim Laminieren angepasst werden, das Laminieren kann also ohne Adaption der Laminierdrücke etc. erfolgen.

Gemäß der Erfindung ist die Spulenstabilisierung größer als der Kreuzungsbereich zwischen einzubringendem Kartenelement und der Spule. Somit werden beim Laminieren auftretende Belastungen großflächig verteilt und die Spule besonders geschont.

Gemäß der Erfindung ist die Spulenstabilisierung ein flüssiges Material, welches gut oberhalb der Spule appliziert werden kann. Derartige Materialen als Spulenstabilisierungen lassen sich einfach applizieren und insbesondere gut laminieren. Durch die Materialen sollte in einer Weiterbildung auch eine zusätzliche Haftverbindung erzeugt werden, die die Spule weiter stabilisiert.

In einer bevorzugten Ausgestaltung wird die Spulenstabilisierung mittels einer Dosiereinheit appliziert, wobei die Dosiereinheit die flexible Spulenstabilisierung beinhaltet. Derartige Dosiereinheiten können in kurzer Zeit die Spulenstabilisierung applizieren, sodass diese für eine schnelle Massenfertigung mit örtlich und mengentechnisch exakter Applizierung geeignet sind. In einer alternativen Ausgestaltung wird die Spulenstabilisierung drucktechnisch appliziert. Insbesondere ist ein Siebdruckverfahren anzuwenden, was zu einer örtlich genauen und schnellen Applizierung führt.

Insbesondere ist in den Datenträger ein Chip integriert, welcher mit der Spule elektrisch leitend verbunden wird. Der Begriff Chip umfasst einerseits ein separates Chipmodul, welches auf in den Datenträgerkörper eingebracht wird und mit elektronischen Komponenten, beispielsweise einer Nahfeldantenne des Datenträgerkörpers elektrisch leitend verbunden wird. In diesem Fall sind ggf. zusätzlich Kontaktflächen auf dem Chipmodul ausgebildet, welche zu einer kontaktbehafteten Kommunikation verwendet werden. Andererseits ist der Chip ein mit Kontaktanschlüssen versehener Halbleiterchip, der in den Datenträger eingebracht wird und dort mit elektrischen Komponenten, beispielsweise einer Nahfeldantenne elektrisch leitend verbunden wird. Hier sind insbesondere Chips in Flip-Chip Technologie zu nennen. Dieser Halbleiterchip kann in einer Ausgestaltung mit einer Vergussmasse ummantelt sein.

Die gestellte Aufgabe wird durch ein alternatives Verfahren zum Herstellen eines tragbaren Datenträgers zur Kontaktloskommunikation gemäß Anspruch 1 gelöst.

Um eine ausreichende Nahfeldkommunikation zu ermöglichen, werden die Spulen als Windungen von Leiterbahnen verlegt. Da der Datenträger flächig begrenzt ist, werden die Leiterbahnen beispielsweise in einem Randbereich der Trägerschicht platziert. Die Leiterbahnen werden dann im Wesentlichen parallel zu den jeweiligen Seitenkanten verlegt. Mit im Wesentlichen wird hierin angedeutet, dass das Verlegen der Leiterbahn nicht immer exakt mathematisch parallel erfolgt und in den Eckbereichen des Datenträgers eine Parallelität nicht eingehalten werden kann. Mit dem Begriff des bereichsweise nicht parallelen Verlegens wird hierin verstanden, dass die Leiterbahn, die normalerweise entlang einer Seitenkante parallel verlegt wird, zur Ausführung des erfindungsgemäßen Verfahrens einen zusätzlichen Bogen, Schleife, Knick etc. aufweist. Durch diesen Bogen wird die Leiterbahn physisch verlängert und verändert ihren im Wesentlichen konstanten Abstand zur Seitenkante im Bereich des Bogens. Alternativ können die Leiterbahnen auch in einem inneren Bereich der Trägerschicht angeordnet sein.

Durch dieses Verfahren wird erreicht, dass die auf die Spule während des Laminierens wirkenden Scherkräfte besser auf die Spule verteilt werden und auch auf die Trägerschicht abgeleitet werden. Durch diese Scherkräfteverteilung wird die Spule während des Laminierens geschützt und ein Spulenriss oder Spulenbruch vermieden.

Bevorzugt wird ein Kartenelement der eingangs beschriebenen Art in den Datenträger eingebracht. Die Spule wird in dem Teilbereich unterhalb des Kartenelements derart verlegt, dass eine gedachte Kreuzung zwischen Kartenelement und Spule in einem Winkel kleiner 90 Grad erfolgt.

Ist das Kartenelement ein Sicherheitsfaden, kreuzt dieser die Spule mindestens einmal. Bei einem Sicherheitsfaden, der über eine gesamte Seitenkante des Datenträgers im Datenträgerkörper eingebracht wird, kreuzt dieser Sicherheitsfaden die Spule sogar zweimal.

Die gestellte Aufgabe wird weiterhin durch einen Datenträgerkörper gemäß Anspruch 5 gelöst, wobei die Trägerschicht einen Chip und eine Spule aufweist. Der Chip und die Spule sind dabei elektrisch leitend miteinander verbunden. Die Trägerschicht und die Deckschicht sind mittels eines Laminierprozesses verbunden. Auf der Spule ist eine Spulenstabilisierung angeordnet, welche die Spule vor dem Laminieren bedeckt.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
Figur 1 einen Datenträger in Draufsicht mit eingebrachter Nahfeldantenne und Sicherheitsfaden als Kartenelement gemäß Stand der Technik
Figur 2a-b den Datenträger gemäß Figur 1 im Querschnitt gemäß Schnittlinie A-A'
Figur 3a-e einen erfindungsgemäßen Datenträger in den einzelnen Herstellungsschritten
Figur 4a-e einen erfindungsgemäßen Datenträger in zu Figur 3 alternativen Herstellungsschritten
Figur 5 eine Draufsicht auf einen gemäß Figuren 3 oder 4 hergestellten Datenträger
Figur 6 eine Draufsicht auf einen erfindungsgemäßen Datenträger mit alternativer Leiterbahnverlegung
Figur 7 Ein erfindungsgemäß hergestellter Datenträger mit weiteren Overlayschichten

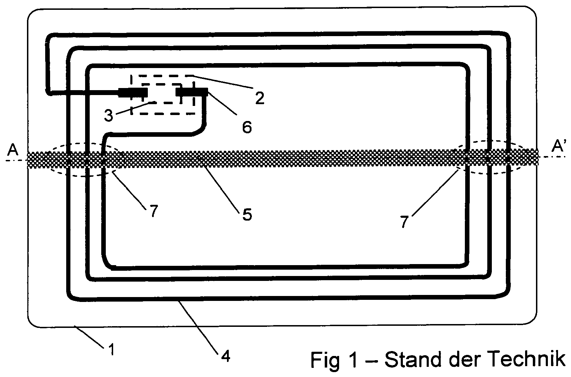

Figur 1 zeigt einen Datenträger 1 in Draufsicht mit eingebrachter Spule 4 und Sicherheitsfaden 5 gemäß heutigem Stand der Technik. Dabei ist in den Datenträgerkörper 1 eine Aussparung 2 eingebracht. Diese Aussparung 2 ist auf unterschiedliche Weise herstellbar, insbesondere durch schichtweises Aufbauen des Datenträgerkörpers 8 mit einer entsprechenden Aussparung 2 in einer der Schichten. In die Aussparung 2 wird ein Chip 3 eingebracht. Der Chip kann mittel Flip-Chip-Technologie eingebracht werden, wobei Kontaktflächen des Chips mit den Anschlussstellen 6 der Spule 4 elektrisch leitend verbunden werden. Die Spule ist dazu eingerichtet, kontaktlos Daten mit einem in Kommunikationsreichweite befindlichen Datenträger auszutauschen. Alternativ ist der Chip 3 ein kontaktloses Chipmodul und ein kontaktbehaftetes Chipmodul mit einem, auf einem Substrat mit Kontaktfeldern angeordneten integrierten Halbleiterchip. Damit ist neben dem kontaktlosen Datenaustausch auch ein kontaktbehafteter Datenaustausch mit einem externen Endgerät möglich. Der Chip 3 wird mittels eines Chipklebers im Datenträgerkörper 8 platziert.

Um die betrügerische Nachahmung derartiger Datenträger 1 zu verringern oder gänzlich zu verhindern, wird in den Datenträgerkörper 8 ein Sicherheitsfaden 5 eingebracht. Der Sicherheitsfaden 5 ist in einer der eingangs beschriebenen Arten beschaffen und kann somit ein Sicherheitsfaden, Sicherheitsband, Sicherheitsstreifen, einseitiger oder zweiseitiger Fensterfaden, einschichtig oder mehrschichtig, metallisch, teil-metallisch, rein maschinell auslesbarer oder maschinell-visuell auswertbarer Sicherheitsfaden sein. Der Faden 5 ist bevorzugt von einer Seitenkante zu einer gegenüberliegenden Seitenkante des Datenträgers 1 in einer der Schichten des Datenträgers 1 verlegt.

Durch das Einbringen des Fadens 5 in einen Datenträger 1 mit Spule 4 entstehen Bereiche 7, in denen Faden und Spule kreuzen. Im Folgenden werden diese Bereiche als Kreuzungsbereiche 7 beschrieben.

Derartige Datenträger 1 werden vielseitig eingesetzt und insbesondere für ein berührungsloses Auslesen und Einbringen von Daten auf/vom Halbleiterchip 3 verwendet. Insbesondere werden derartige Aufbauten für elektronische Identitätsdokumente wie elektronischer Pass und elektronischer Personalausweis verwendet.

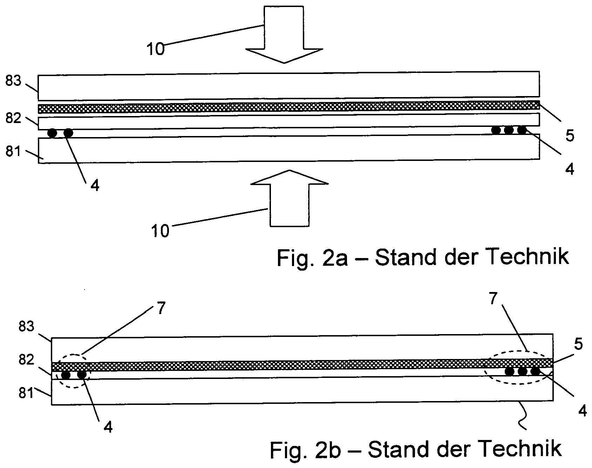

In Figuren 2a und 2b ist ein gemäß einer Schnittlinie A-A' der Figur 1 gezeigter Querschnitt eines derartigen Datenträgers 1 vor bzw. nach dem Laminieren 10 skizziert. Zu erkennen ist, dass der Datenträgerkörper 8 aus einer Schichtenfolge aufgebaut ist. Die Spule 4 ist auf einer Trägerschicht 81 aufgebracht, insbesondere in einem drucktechnischen Verfahren oder durch Verlegen von Drahtwicklungen in einem Randbereich der Trägerschicht 81. Alternativ wird die Spule 4 in einem Ätzverfahren erzeugt, wobei eine vollflächige leitende Schicht mit einem Abdecklack beschichtet wird. Der Abdecklack ist in Form der zu erhaltenen Spule 4, die beim Ätzvorgang von dem Ätzmittel nicht entfernt wird. Beschleunigt werden kann das Ätzverfahren durch die sogenannte Galvanotechnik. Oberhalb der Trägerschicht 81 wird eine Kernschicht 82 angeordnet. Oberhalb der Kernschicht 82 wird beispielhaft der Sicherheitsfaden 5 angeordnet. Der Sicherheitsfaden 5 kann dabei direkt auf der Kernschicht 82 eingebracht werden oder in einer weiteren Schicht oberhalb oder unterhalb der Kernschicht 82 in den Datenträger 1 eingebracht werden. In einer Alternative wird der Sicherheitsfaden oberhalb der Deckschicht 83 appliziert. Oberhalb des Sicherheitsfadens 5 wird eine Deckschicht 83 angeordnet. Die Schichten 81, 82, 83 sind insbesondere aus Polycarbonat, PC, aufgebaut. Die erhaltene Schichtfolge 81, 82, 83 wird mittels eines Laminierschrittes 10 miteinander verbunden, wie in Figur 2b zu erkennen ist. Beim Laminieren 10 wird die Schichtenfolge zwischen zwei heiße Laminierbleche gelegt. Die heißen Laminierbleche erwärmen die Folienschichten 81, 82, 83 und verringern ihren Abstand zueinander, wodurch die einzelnen Folienschichten 81, 82, 83 aufgeweicht werden und miteinander verbunden.

Wie in Figur 2b gut erkennbar ist, wird durch das Laminieren 10 das Material der Kernschicht 82 in den Kreuzungsbereichen 7 zwischen Spule 4 und Faden 5 stark verdrängt. Da der Sicherheitsfaden 5 ein mechanisch stabileres Material ist, als die darunterliegende Kernschicht 82, wird der Druck durch das Laminieren 10 von dem Sicherheitsfaden 5 auf die Spule 4 übertragen. Daraufhin wird Material der Spule 4 verdrängt und die Spule 4 in den Kreuzungsbereichen stark geschwächt.

Aufgrund alltäglicher Verwendung des Datenträgers erweist sich diese Schwächung als Nachteil, da die Spule in diesen Kreuzungsbereichen 7 brechen kann. Es entstehen Spulenrisse oder Spulenbrüche, wodurch ein berührungsloses Austauschen von Daten mit dem Chip 3 nicht mehr möglich ist. Der Datenträger ist dann defekt und muss ausgetauscht werden.

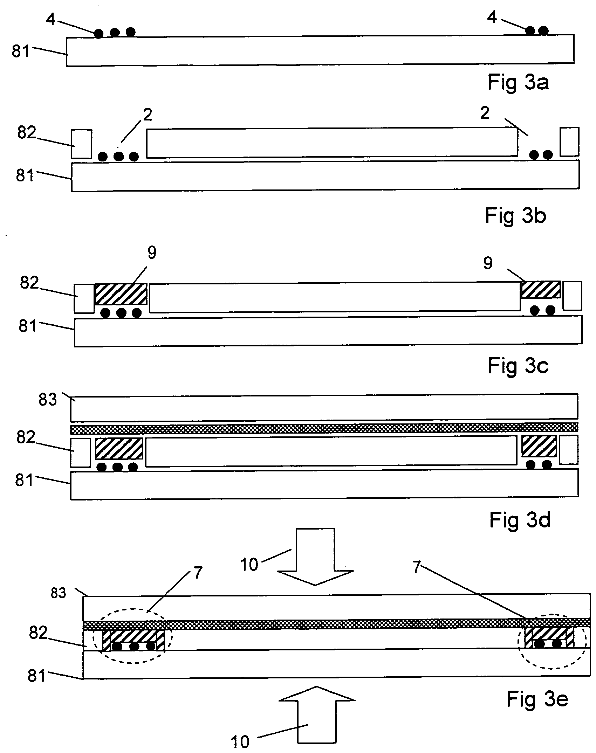

In Figuren 3 bis 7 sind daher Datenträger 1 anhand alternativer Herstellungsschritte dargestellt, bei dem die Schwächung der Spule beim Laminieren 10 verhindert wird. Prinzipiell können einzelne Maßnahmen, die in den unterschiedlichen Figuren beschrieben sind, miteinander kombiniert werden. Der Aufbau der Datenträger 1 erfolgt dabei in Schichten 81 bis 83 bzw. 84, wobei die einzelnen Schichten 81 bis 83 bzw. 84 aus Folienmaterial, insbesondere PC, hergestellt sind. Vorrangig sind dieses Verfahren für einen Massenfertigung vorgesehen, sodass die Folienschichten 81 bis 83 bzw. 84 entweder als Endlosmaterial im Rolle-zu-Rolle Verfahren bereitgestellt und bearbeitet werden oder in Form von Folienbögen bereitgestellt werden, aus denen jeweils die einzelnen Datenträger 1 nach dem Laminieren vereinzelt werden.

Zunächst wird das Herstellungsverfahren gemäß Figuren 3a-e beschrieben. Gemäß Figur 3a wird eine Trägerschicht 81 bereitgestellt. Diese Trägerschicht 81 weist eine Spule 4 auf, die auf die Trägerschicht 81 entweder durch ein Druckverfahren aufgedruckt, durch ein Ätzverfahren aufgebracht oder als Drahtwicklung oberhalb der Trägerschicht 81 aufgebracht wurde. Oberhalb der Trägerschicht 81 auf der Seite der Spule 4 wird eine Kernschicht 82 angeordnet, wie in Figur 3b gezeigt. Diese Kernschicht 82 wird auch als Spacerschicht oder Spacerfolie 82 bezeichnet. Die Kernschicht 82 weist in Figur 3 zwei Aussparungen 2 oberhalb der Spule 4 auf. Es ist denkbar, dass die Kernschicht 82 eine weitere Aussparung 2 aufweist, in die der Chip 3 platziert wird. Alternativ weist die Kernschicht 82 nur eine Aussparung auf, wenn das einzubringende Kartenelement die Spule 4 nur in einem Bereich 7 kreuzt. Die Aussparungen 2 sind im einfachsten Fall zwei Fenster in der Folie 82, bevorzugt im Kreuzungsbereich 7 der Spule 5 mit dem Kartenelement. Gemäß Figur 3c wird nun eine erfindungsgemäß jeweils eine Spulenstabilisierung 9 oberhalb der Spule 4 in die Aussparungen 2 appliziert. Das Applizieren erfolgt mittels einer nicht dargestellten Dosiereinheit oder alternativ in einem Siebdruckverfahren. Die Kernfolie 82 weist eine höhere Dicke als die Kombination aus Spule 4 und Spulenstabilisierung 9 auf, sodass sowohl Spule 4 als auch Spulenstabilisierung 9 in den Aussparungen 2 eingebracht werden können. Die Spulenstabilisierung 9 weist eine derartige Viskosität auf, dass auch die Seitenflächen der Aussparung 2 benetzt werden.

Gemäß Figur 3d wird nun ein Kartenelement, hier ein Sicherheitsfaden 5 und eine Deckschicht 83 auf die Kernschicht 82 angeordnet. Die Position des Sicherheitsfadens 5 in der Schichtenfolge ist dabei nicht einschränkend. Insbesondere kann der Sicherheitsfaden 5 auch oberhalb der Deckschicht 83 in den Datenträger 1 eingebracht werden. Der Sicherheitsfaden 5 ist mehrschichtig aufgebaut und wird aufgrund der zumindest teilweise transparenten Deckschicht 83 bei Draufsicht auf den Datenträger 1 für einen Benutzer sichtbar und kann daher als visuell und maschinell auswertbares Sicherheitsmerkmal des Datenträgers 1 verwendet werden. Alternativ ist die Deckschicht 83 nicht transparent oder transluzent und verdeckt den Sicherheitsfaden 5. Dann wird der Sicherheitsfaden als maschinell auswertbares Sicherheitsmerkmal verwendet.

Der erhaltene Schichtaufbau 81 bis 83 wird laminiert, was durch die Pfeile 10 in Figur 3e dargestellt ist. Durch die Viskosität der Spulenstabilisierung 9 wird erreicht, dass die Spule 4 oberhalb ummantelt wird. Mechanischer Stress, der während des Laminierens 10 aufgebaut wird, wird von der Spulenstabilisierung 9 absorbiert, sodass die Spule 4 keine Schwächung aufgrund des Laminierens aufweist.

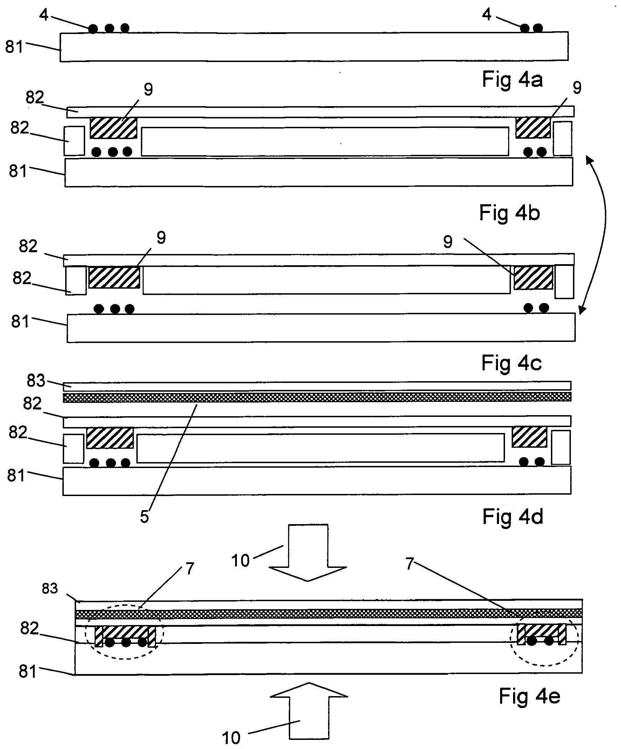

In Figur 4a bis 4e ist ein zu Figur 3a-e modifiziertes Herstellungsverfahren dargestellt, wobei hier nur auf die wesentlichen Unterschiede eingegangen wird. Im Unterschied zu Figur 3b wird in Figur 4b anstelle der Spulenstabilisierung 9 zunächst die Kernschicht 82 auf der Trägerschicht 81 angeordnet, die Aussparungen 2 aufweist. Die Kernschicht 82 ist beispielsweise mehrschichtig aufgebaut. Alternativ sind mehrschichtige Deckschichten 83 vorgesehen. Eine derartige Kernschicht 82 oder Deckschicht 83 kann auch im Herstellungsverfahren gemäß Figur 3 verwendet werden. Auf die Unterseite einer zweiten Kernschicht 82 wird die Spulenstabilisierung 9 aufgebracht. Dies erfolgt beispielsweise in Form eines Siebdrucks. Anschließend wird die zweite Kernschicht 82 auf die erste Kernschicht 82 appliziert, wobei die Spulenstabilisierung 9 in die Aussparungen 2 der ersten Kernschicht 82 eingebracht wird. Wie anhand der Figur 4c dargestellt ist, kann auch die Kernschicht 82 mit der Spulenstabilisierung 9 innerhalb der Aussparungen 4 auf die Trägerschicht 81 appliziert werden. Anstelle des Verfahrens nach Figur 4b kann auch das Verfahren nach Figur 4c verwendet werden, was durch den rechten Doppelpfeil angedeutet wird. Alternativ und nicht dargestellt, kann die Spulenstabilisierung 9 auch auf eine Deckschicht 83 appliziert werden, um dann in die Aussparung 2 der Kernschicht 82 appliziert zu werden.

Gemäß Figur 4d wird nun die Deckschicht 83 mit dem Sicherheitsfaden 5 als einzubringendes Kartenelement oberhalb der Spulenstabilisierung 9 bzw. der Kernschicht 82 angeordnet. Wie aus Figur 4d ersichtlich wird, ist der Sicherheitsfaden 5 zwischen einer Deckschicht 83 bestehend aus mehreren Lagen eingebettet. Damit soll angedeutet werden, dass oberhalb der Kernschicht 82 und der Spulenstabilisierung 9 zwar eine Deckschicht 83 angeordnet wird, die exakte Schichtenfolge aus Kartenelement und Deckschicht 83 allerdings variieren kann. Diese ist abhängig von dem tatsächlich einzubringenden Kartenelement. Im Fall, das Kartenelement ist ein Sicherheitsfaden 5 kann die Schichtenfolge oberhalb der Kernschicht 82 mit der Spulenstabilisierung 9 ebenfalls aufgrund der Beschaffenheit des Sicherheitsfadens 5 und der Art des Fadens 5 variieren. Alternativ und nicht dargestellt, kann der Sicherheitsfaden 5 auch oberhalb der Deckschicht 83 appliziert werden. Die Variation des Schichtenaufbaus ist auch im Herstellungsverfahren gemäß Figur 3 anwendbar. Der Sicherheitsfaden 5 kann eingewebt, eingeflechtet, eingeschweißt oder lose eingelegt werden.

Gemäß Figur 4e wird der Schichtenaufbau 81, 82, 83 laminiert.

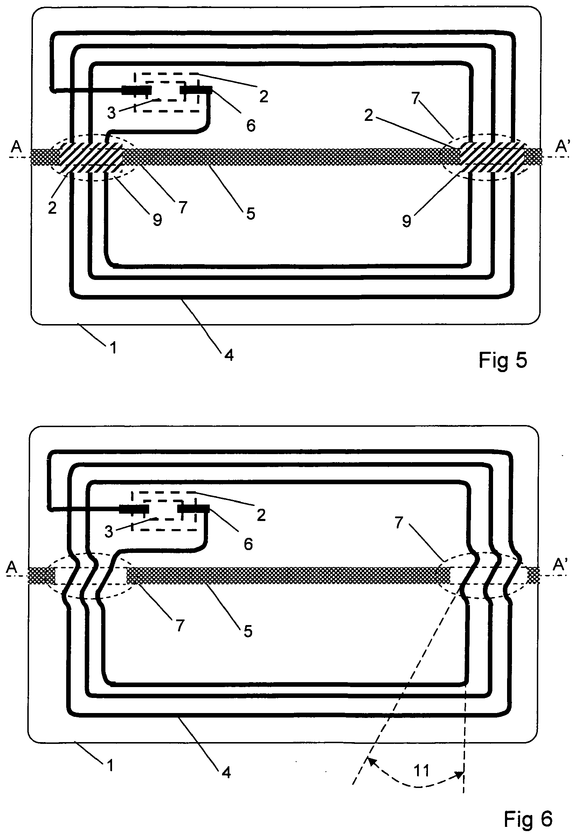

In Figur 5 ist eine Draufsicht der gemäß Figuren 3 und 4 hergestellten Datenträger 1 gezeigt. Die Figur 5 ähnelt der Darstellung der Figur 1, zeigt allerdings die erfindungswesentliche Spulenstabilisierung 9 in den Kreuzungsbereichen 7 zwischen Spule 4 und Sicherheitsfaden 5. Eine Alternative Verlegung des Sicherheitsfadens 5 bedingt ein alternatives Applizieren der Spulenstabilisierung 9. Die Spulenstabilisierung 9 der Figuren 3 bis 5 verteilt sich während des Laminierens gleichmäßig um die Spule 4, sowie die Zwischenräume der einzelnen Leiterbahnen. Als Spulenstabilisierung ist insbesondere ein flüssiges Material, welches gut oberhalb der Spule appliziert werden kann. Beispielsweise können Lacke oder Dispersionshaftklebestoffe verwendet werden, die wasserbasiert sind. Diese können konventionell trocknen. Sie sind weich einstellbar und können daher gut in die Aussparung 2 appliziert werden. Alternativ basieren diese Lacke oder Dispersionshaftklebestoffe auf einem Lösungsmittel.

In Figur 6 ist ein zu den Figuren 3 bis 5 alternative Ausführungsform der Erfindung dargestellt. Der Datenträger ähnelt dabei dem Datenträger gemäß Figur 5. Anstelle der Spulenstabilisierung 9 wird die Spule 4 hier alternativ geschützt. Wie zu erkennen ist, sind die Leiterbahnen der Spule 4 im Wesentlichen parallel zu den jeweiligen Seitenkanten des Datenträgers 1 verlegt worden. Im Kreuzungsbereich 7 zwischen Spule 4 und Sicherheitsfaden 5 wird nun erfindungsgemäß vom parallelen Verlegen abgewichen. Um die Scherkräfte auf die Spule 4 beim Laminieren zu verringern, kreuzt die Spule 4 den Sicherheitsfaden 5 nicht bei einem Winkel von 90 Grad, sondern bei einem von 90 Grad verschiedenen Winkel 11. Dieses erfindungsgemäße Verlegen der Leiterbahnen bewirkt eine verringerte Kraftauswirkung auf die Spule 4 beim Laminieren, wodurch diese weniger geschwächt wird als bei herkömmlicher Verlegung der Leiterbahnen.

Es ist anzumerken, dass die Maßnahmen gemäß Figur 6 auch auf die einzelnen Herstellungsverfahren gemäß Figuren 3 bis 5 angewendet werden können, um die Spule stärker zu schützen und Spulenrisse oder Spulenbrüche zu verweiden.

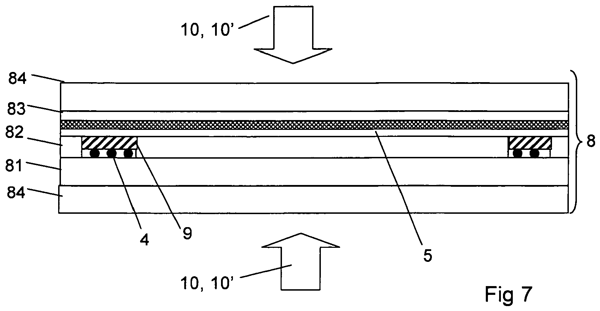

In Figur 7 ist eine Weiterbildung des Datenträgers 1 gemäß Figuren 3 bis 6 gezeigt, aus der ersichtlich wird, dass die Schichtenfolge aus Trägerschicht 81, Kernschicht 82 und Deckschicht 83 als Inlay für einen Datenträger 1 vorgesehen sein können und weitere Overlayschichten 84 beidseitig auf das Inlay aufgebrachte werden können. Das Inlay kann bereits laminiert sein und die Overlayschichten 84 werden in einem weiteren Laminiervorgang 10' aufgebracht werden. Die Overlayfolien 84 dienen für den Designdruck und ggf. eine optische Personalisierung des Datenträgers 1. Alternativ kann auf die Herstellung eines Inlays verzichtet werden und die Schichtenfolge wird in einem Durchgang laminiert 10.

### Bezugszeichenliste

- 1: Tragbarer Datenträger, Kontaktloschipkarte
- 2: Aussparung
- 3: Integrierter Halbleiterschaltkreis, Chip
- 4: Nahfeldantenne, Spule
- 5: Sicherheitsfaden
- 6: Elektrische Verbindung zwischen Spule und Chipmodul
- 7: Kreuzungsbereich zwischen Spule und Sicherheitsfaden
- 8: Datenträgerkörper
81 Trägerschicht
82 Kernschicht
83 Deckschicht
84 Overlayschicht
- 9: Spulenstabilisierung
- 10: Laminierbleche
- 11: Winkel im Kreuzungsbereich
- A-A': Schnittlinie durch den Datenträger

## Patentansprüche

1. Verfahren zum Herstellen eines tragbaren Datenträgers (1) zur Kontaktloskommunikation mit den Verfahrensschritten:
- Bereitstellen einer Trägerschicht (81) mit einer Spule (4) zur Nahfeldkommunikation;
- Aufbringen einer Deckschicht (83) auf die Trägerschicht (81) und
- Laminieren (10) der resultierenden Schichtenfolge (81, 83)
**dadurch gekennzeichnet, dass**:
- vor dem Aufbringen der Deckschicht (83) eine Spulenstabilisierung (9) auf die Spule (4) appliziert wird und
- oberhalb der Spulenstabilisierung (9) ein Kartenelement in den Datenträger (1) eingebracht wird
- wobei für die Spulenstabilisierung (9) ein flüssiges Material eingebracht wird,
- wobei als Kartenelement ein Sicherheitsfaden oder ein Magnetstreifen eingebracht wird
- wobei die Spulenstabilisierung (9) eine größere Oberfläche als der Kreuzungsbereich zwischen einzubringendem Kartenelement und Spule aufweist..

2. Verfahren nach Anspruch 1, wobei vor dem Aufbringen der Deckschicht (83) eine Kernschicht (82) aufgebracht wird und die Spulenstabilisierung (9) direkt auf die Spule und/oder oberhalb der Spule auf die Kernschicht (82) appliziert wird.

3. Verfahren nach einem der Ansprüche 1 oder 2, wobei die Spulenstabilisierung (5) in eine Aussparung (2) der Kernschicht (82) appliziert wird.

4. Verfahren nach einem der vorhergehenden Ansprüche, wobei das Stabilisierungsmittel (9) mittels einer Dosiereinheit oder drucktechnisch appliziert wird.

5. Datenträgerkörper (8) bestehend aus
- einer Trägerschicht (81) und einer Deckschicht (83), wobei:
- die Trägerschicht (81) einen Chip (3) und eine Spule (4) aufweist, wobei Chip (3) und Spule (4) elektrisch leitend miteinander verbunden sind;
- Trägerschicht (81) und Deckschicht (83) durch Laminieren (10) miteinander verbunden sind,
**dadurch gekennzeichnet, dass**
- auf der Spule eine Spulenstabilisierung (9) angeordnet ist, welche die Spule vor dem Laminieren (10) bedeckt und
- oberhalb der Spulenstabilisierung (9) ein Kartenelement im Datenträger (1) angeordnet ist,
- wobei für die Spulenstabilisierung (9) ein flüssiges Material eingebracht ist,
- wobei als Kartenelement ein Sicherheitsfaden oder ein Magnetstreifen eingebracht ist,
- wobei die Spulenstabilisierung (9) eine größere Oberfläche als der Kreuzungsbereich zwischen einzubringendem Kartenelement und Spule aufweist..

6. Datenträgerkörper (8) nach Anspruch 5, wobei das Stabilisierungsmittel (8) ein wasserbasierter und/oder lösungsmittelbasierter Lack und/oder Haftkleber ist.

## Claims

1. A method for manufacturing a portable data carrier (1) for contactless communication having the method steps of:
- making available a carrier layer (81) having a coil (4) for near-field communication;
- mounting a cover layer (83) on the carrier layer (81), and
- laminating (10) the resultant layer sequence (81, 83),
**characterized in that:**
- before mounting the cover layer (83), a coil stabilizer (9) is applied to the coil (4), and
- above the coil stabilizer (9) a card element is incorporated into the data carrier (1)
- wherein for the coil stabilizer (9), a liquid material is incorporated,
- wherein as a card element, a security thread or a magnetic strip is incorporated,
- wherein the coil stabilizer (9) has a greater surface than the intersecting region between card element to be incorporated and coil.

2. The method according to claim 1, wherein before mounting the cover layer (83), a core layer (82) is mounted and the coil stabilizer (9) is applied directly on the coil and/or above the coil to the core layer (82).

3. The method according to either of claims 1 and 2, wherein the coil stabilizer (5) is applied into a gap (2) of the core layer (82).

4. The method according to any of the preceding claims, wherein the stabilization means (9) is applied by means of a metering unit or by printing technology.

5. A data-carrier body (8) consisting of
- a carrier layer (81) and a cover layer (83), wherein:
- the carrier layer (81) has a chip (3) and a coil (4), with chip (3) and coil (4) being interconnected electroconductively;
- carrier layer (81) and cover layer (83) are interconnected by laminating (10),
**characterized in that**
- the coil has disposed thereon a coil stabilizer (9) which covers the coil before laminating (10), and
- above the coil stabilizer (9) there is a card element disposed in the data carrier (1),
- wherein for the coil stabilizer (9), a liquid material is incorporated,
- wherein as a card element, a security thread or a magnetic strip is incorporated,
- wherein the coil stabilization (9) has a greater surface than the intersecting region between card element to be incorporated and coil.

6. The data-carrier body (8) according to claim 5, wherein the stabilization means (8) is a water-based and/or solvent-based lacquer and/or contact adhesive.

## Revendications

1. Procédé de fabrication d'un support de données (1) portable destiné à la communication sans contact, comprenant les étapes de procédé:
- mise à disposition d'une couche support (81) dotée d'une bobine (4) pour la communication à champ proche,
- application d'une couche de recouvrement (83) sur la couche support (81) et
- laminage (10) de la succession de couches (81, 83) résultante
**caractérisé en ce que**:
- avant l'application de la couche de recouvrement (83), une stabilisation de bobine (9) est placée sur la bobine (4) et
- au-dessus de la stabilisation de bobine (9), un élément de carte est introduit dans le support de données (1)
- cependant que, pour la stabilisation de bobine (9), une matière liquide est introduite,
- cependant que, en tant qu'élément de carte, un fil de sécurité ou un ruban magnétique est introduit
- cependant que la stabilisation de bobine (9) a une surface plus grande que la zone de croisement entre l'élément de carte à introduire et la bobine.

2. Procédé selon la revendication 1, cependant que, avant l'application de la couche de recouvrement (83), une couche noyau (82) est appliquée et la stabilisation de bobine (9) est placée directement sur la bobine et/ou au-dessus de la bobine sur la couche noyau (82).

3. Procédé selon une des revendications 1 ou 2, cependant que la stabilisation de bobine (5) est placée dans un évidement (2) de la couche noyau (82).

4. Procédé selon une des revendications précédentes, cependant que l'agent de stabilisation (9) est placé au moyen d'une unité de dosage ou par impression.

5. Corps de support de données (8) consistant en
- une couche support (81) et une couche de recouvrement (83), cependant que:
- la couche support (81) comporte une puce (3) et une bobine (4), la puce (3) et la bobine (4) étant reliées entre elles de manière électroconductrice;
- la couche support (81) et la couche de recouvrement (83) sont jointes entre elles par laminage (10);
**caractérisé en ce que:**
- sur la bobine, une stabilisation de bobine (9) est agencée, laquelle recouvre la bobine avant le laminage (10) et
- au-dessus de la stabilisation de bobine (9), un élément de carte est agencé dans le support de données (1),
- cependant que, pour la stabilisation de bobine (9), une matière liquide est introduite,
- cependant que, en tant qu'élément de carte, un fil de sécurité ou un ruban magnétique est introduit,
- cependant que la stabilisation de bobine (9) a une surface plus grande que la zone de croisement entre l'élément de carte à introduire et la bobine.

6. Corps de support de données (8) selon la revendication 5, cependant que l'agent de stabilisation (8) est un vernis et/ou adhésif à base d'eau et/ou à base de solvant.
